Europäisches Patentamt

European Patent Office

Office européen des brevets

(11) Publication number: **0 311 189**
**A1**

## (12) EUROPEAN PATENT APPLICATION

(21) Application number: 88202131.4

(22) Date of filing: 29.09.88

(51) Int. Cl.⁴: **G03B 21/60**

(30) Priority: 06.10.87 US 107087
27.05.88 NL 8801361

(43) Date of publication of application:
**12.04.89 Bulletin 89/15**

(84) Designated Contracting States:
**DE FR GB IT**

(71) Applicant: **N.V. Philips' Gloeilampenfabrieken**
**Groenewoudseweg 1**
**NL-5621 BA Eindhoven(NL)**

Applicant: **NORTH AMERICAN PHILIPS**
**CONSUMER ELECTRONICS CORP.**
**100E 42nd Street**
**New York N.Y. 10017(US)**

(72) Inventor: **Bradley, Ralph Hampton**
**c/o Int. Octrooibureau B.V. Prof. Hostlaan 6**
**NL-5656 AA Eindhoven(NL)**
Inventor: **Guerinot, William Francis**
**c/o Int. Octrooibureau B.V. Prof. Holstlaan 6**
**NL-5656 AA Eindhoven(NL)**
Inventor: **Van de Ven, Johannes Cornelis**
**c/o Int. Octrooibureau B.V. Prof. Holstlaan 6**
**NL-5656 AA Eindhoven(NL)**

(74) Representative: **Peters, Rudolf Johannes et al**
**INTERNATIONAAL OCTROOIBUREAU B.V.**
**Prof. Holstlaan 6**
**NL-5656 AA Eindhoven(NL)**

(54) **Front projection screen.**

(57) A front projection screen comprises a transparent plate (20) whose rear side (25) is reflective. The front and rear side of the plate have two linear Fresnel structures (22, 23; 26, 27) crossing each other. The incident light is spread by microlens structures (122, 126) arranged on the facets on the front and rear sides and by bulk diffusor (120) in the plate. Ambient light incident on the screen leaves the screen on the rear side via the edges (27) which are present between the facets (26) on the rear side. This results in an enhancement of the contrast in the observed picture. Further measures enhancing the contrast are the provision of light-absorbing layers on the edges (23, 27) of the Fresnel structures on the rear and front sides and the provision of wedge-shaped indentations (125) in the rear side of the plate.

FIG.5

## Front projection screen.

The invention relates to a front projection screen for displaying in an audience space an image supplied by an image beam from an image source, which projection screen comprises a plate having a front side and a rear side, the front side facing the audience space, said plate having diffusing means for spreading light from the image source in the audience space.

A front projection screen of this type is known from FR-A 2 413 685. The front side of the front projection screen described in this patent application has a Fresnel structure and an anisotropic layer in which the incident light is reflected in a diffuse manner. Due to the diffusing means in the screen it is achieved that the projected picture is visible in the whole audience space. It is to be noted that within the scope of the invention "an image source" is not only a single image source, for example, a conventional slide or film projector, but also an image source comprising a plurality of projectors placed proximate to one another, such as a projection system which is used to display a colour television or video program, which projection system has separate projectors for the three primary colours.

A problem with images projected on front projection screens is that the contrast of the observed image is reduced due to ambient light incident on the screen and subsequently being reflected towards the viewers. In the case of a diffusely reflecting projection screen, such as the known screen, substantially all the incident ambient light is reflected. This is particularly troublesome in those applications in which a dedicated projection room is not practical, for example, projection television for the consumer market. In such cases, the source and character of ambient lighting is generally unpredictable and thus uncontrollable.

In the known screen the light spreading means are constituted by a diffusely reflecting layer of an anisotropic composition provided proximate to the front side of the screen so that the spreading of light in one direction is larger than in the direction transverse to it. The known anisotropic reflecting layer requires special materials and manufacturing techniques to obtain the anisotropy with the same extent of diffusion in the entire plate.

It is known to increase the image contrast of front projection screens by concentrating the projected light into a multiplicity of picture elements, or "pixels", and by providing an array of reflective areas on a rear surface of the screen to reflect the pixels back through the front surface and into the audience space. Ambient light which enters the screen at oblique angles to the projection axis generally falls on light absorbing areas surrounding the light reflecting areas, and is consequently absorbed. See US-A 4 298 246 and US-A 4 606 609.

In US-A 4 298 246 the front surface is made up of a two-dimensional array of convex lenslets which focus the projected image behind the reflecting areas of the rear surface of the screen, resulting in some spreading of the image as it is reflected back into the audience field.

In US-A 4 606 609 the screen is made up of a plurality of optical cells, each having a front convex lens surface, and a rear surface contoured to collimate the reflected light into a narrow beam. Spreading of the image is accomplished by light diffusing areas on the front lens surfaces located in the path of the reflected light, which diffuse the beams into the audience field.

In the above arrangements, optimum performance is dependent upon holding a relatively close tolerance on screen thickness, as well as the registration between the front and back surfaces, both needed to insure that the focal points of the front surface lenses fall at the desired location relative to the rear reflecting surface.

In addition, these arrangements are designed with the assumption that the projected light is parallel to the projection axis and thus normally incident on the screen surface. For a flat screen, this is generally true only in a central portion of the screen near the projection axis. With increasing distance away from the projection axis, the angle of incidence of the projected light increases, increasing the likelihood that the pixels will be partly of totally intercepted by the light absorbing areas.

It is an object of the invention to provide a front projection screen in which a portion of the incident ambient light is not reflected and whose optically active parts of the screen have an isotropic composition.

It is also an object of the invention to provide a front projection screen in which projected light is reflected by an array of light reflecting areas bordered by non-reflecting areas for image contrast, which screen does not rely upon a front surface array of lenses to concentrate the light.

To this end the projection screen according to the invention is characterized in that the plate is transparent and that the rear side of the plate is provided with a relief structure comprising first and second facets, said first facets being planer and orientated substantially in parallel with the plane of the plate, and provided with reflection means, said second facets being non-reflective and orientated at an angle of more than 45° to the plane of the plate.

The relief structure on the rear side of the plate comprises reflecting first facets with second facets therebetween, the latter being arranged mainly perpendicularly to the plane of the plate. Light which is incident through the plate on the second facets will partly emerge via these facets on the rear side of the plate. Consequently, this light cannot emerge on the front side towards the audience space. Due to the orientation of the screen with respect to the image source and the sources of the ambient light, relatively more ambient light will be incident on the second facets than will light from the image source. This results in that the deterioration of the contrast in the observed image due to reflected ambient light is less than in the known screen. The screen material itself is a homogeneous material so that problems caused by the combination of two materials to an anisotropic but otherwise uniform assembly are obviated.

A front projection screen according to the invention is characterized in that the relief structure on the rear side is provided with longitudinal indentations alternating with flat portion, forming first facets of the relief structure, said indentations having sidewall portions forming second facets of the relief structure.

The indentations may extend throughout the width or height of the plate or only through a part thereof. Radiation incident on the sidewall portions of the indentations is reflected thereon or partly emerges to the exterior, dependent on the angle of incidence. Since the indentations are positioned in such a way that the sidewall portions extend at a small angle to the image beam from the image source, light from the image beam will be substantially only reflected and a considerable part of the ambient light, incident under a larger angle, will leave the plate on its rear side via the sidewall portions. Thus, relatively less ambient light is reflected than light of the image beam so that the contrast in the projected image is higher.

A further embodiment of the projection screen according to the invention is characterized in that said relief structure comprises a Fresnel structure, the Fresnel facets and riser facets of said Fresnel structure forming first and second facets of the relief structure, respectively. The Fresnel structure converges the image beam into the audience space, such that the image observed has a comparable brightness throughout the screen.

In accordance with a preferred embodiment of the invention the projection screen is characterized in that the relief structure comprises lenticular elements formed by the alternation of indentations and first facets, the first facets constituting tip portions of the lenticular elements, whereby the lenticular elements have a height to base width ratio of about 1:2 to 6:1 and a base width to top width ratio from about 2:1 to 20:1.

Preferably the projection screen in accordance with the invention is characterized in that light-absorbing material is deposited at the second facets of the relief structure. Consequently, the light emerging from the second facets is absorbed and can no longer reach the audience space via other paths, for example, after reflection at other faces. Also the maximum angle of incidence at which total internal reflection occurs at the second facets may be reduced, thereby causing less ambient light to be reflected and more ambient light to be absorbed at the second facets. The light absorbing material may comprise, for example filaments, particles or coatings.

Another embodiment of the projection screen according to the invention is characterized in that the plate comprises a first linear Fresnel structure at the front side of the plate extending in a first direction, and a second linear Fresnel structure at the rear side of the plate extending in a direction perpendicular to said first direction.

A linear Fresnel structure can be made in a relatively simple way. For example, the first Fresnel structure on the front side of the plate can be a horizontal Fresnel structure converging the image beam in the vertical direction. The second Fresnel structure is then a structure extending in the vertical direction and converging the image beam in the horizontal direction towards the audience space.

It is to be noted that it is known per se, for example from US-A 3 580 661 to provide two linear Fresnel structures on either side of a transparent plate in a projection screen. However, the known screen is a rear projection screen, that is to say, a screen intended for a projection device in which the image beam, viewed from the audience space, is incident on the rear side. In such a screen there is no problem of incident light from the image beam and ambient light being incident on the same side of the screen, where only the first-mentioned light must be reflected as much as possible.

This embodiment may be further characterized in that light-absorbing material is deposited at the riser facets of said first Fresnel structure. Light absorbing material deposited at these riser facets also predominantly absorbs light from directions other than the direction from which the image beam comes. This measure thus results in a higher contrast in the projected image.

The front projection screen according to the invention is further characterized in that the light diffusing means have a microlens structure provided on the rear side of the plate, which microlens structure comprises a multitude of cylindrical lenses arranged on said first facets and extending in the same direction as said first facets. Such microlens structure provides light spreading in a direction perpendicular to the direction in which the cylindrical lenses extend. The microlens structure on the rear side of the transparent plate can be provided simultaneously and by means of the same process as the relief structure. As compared with light spreading at random, light spreading by means of a microlens structure has the advantage that the reflected light can be better concentrated within the audience space.

The front projection screen according to the invention is further characterized in that the light diffusing means comprises a bulk diffusor incorporated in the transparent plate. A bulk diffusor consists of transparent particles homogeneously incorporated in the plate and having a refractive index which differs from the refractive index of the plate material. The bulk diffusor spreads the light through the plate uniformly in all directions and thus also causes light spreading in the direction in which the microlenses extend on the rear side of the plate.

A preferred embodiment of the front projection screen according to the invention is characterized in that the bulk diffusor is provided as a thin layer in the transparent plate. This has the advantage that the screen permits of a higher resolution for a picture displayed on the screen, as compared with a screen in which the bulk diffusor is spread throughout the thickness of the plate.

An embodiment of the front projection screen according to the invention is further characterized in that the light diffusing means have a microlens structure provided on the front side of the plate, which microlens structure comprises a multitude of cylindrical lenses arranged on Fresnel facets of the first Fresnel structure and extending in the same direction as said Fresnel facets. The quantity of bulk diffusor in the plate may be reduced or even entirely omitted due to this lens structure arranged on the front side. Less bulk diffusor in the plate contributes to the sharpness of the observed picture. In this embodiment the bulk diffusor which is still present is used to mitigate too abrupt intensity variations, for example, due to inaccuracies in the structure on the front and rear sides of the plate, so that an intensity distribution which is pleasant to the eye is created. The bulk diffusor is preferably provided as a thin layer in the plate.

The invention will now be described in greater detail, by way of example, with reference to the accompanying drawings in which

Figure 1 is a cross-sectional side view of a front projection screen according to the invention, arranged in a position with respect to the picture source and the audience space,

Figure 2 is a sectional plan view of the projection screen,

Figures 3 and 4 show two details of a vertical cross-section of possible embodiments of the projection screen according to the invention,

Figure 5 shows a part of Figure 2 in greater detail,

Figure 6 is a horizontal cross-section view showing a portion of another embodiment of the front projection screen according to the invention,

Figure 7 is a cross-section view similar to that of Figure 6 showing a portion of a preferred embodiment of the screen,

Figure 8 is a perspective view of another embodiment of the invention in which the lenticules are truncated pyramids,

Figure 9 is a cross-section view of another embodiment of the invention, in which the front surface of the screen comprises a Fresnel lens, and

Figure 10 is a perspective view of still another embodiment of the invention in which the screen is curved in a horizontal direction and the front surface of the screen comprises a horizontally-orientated linear Fresnel lens.

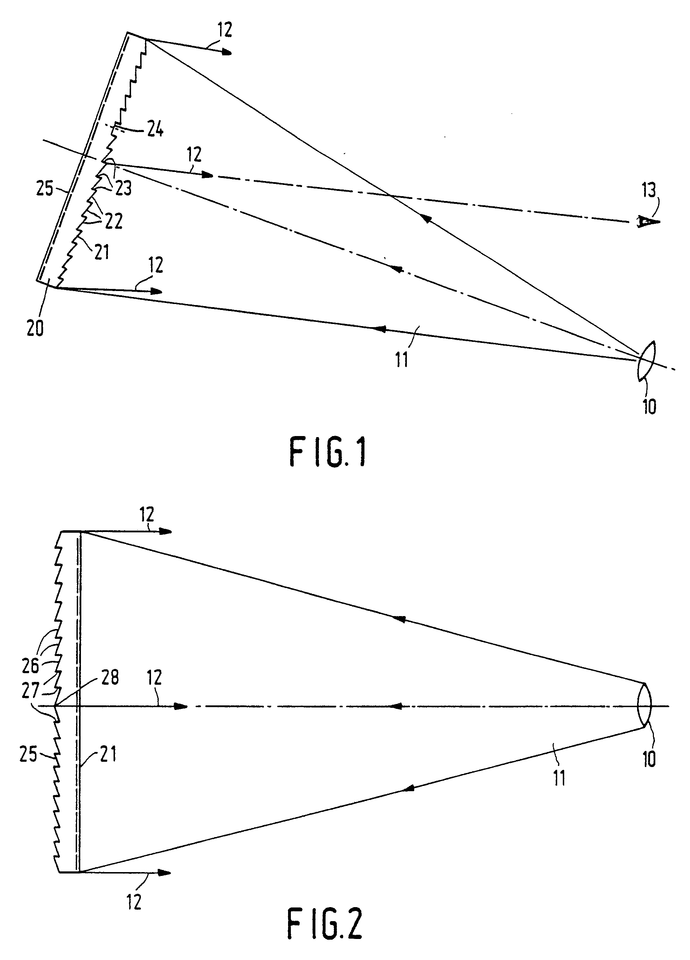

Figure 1 is a vertical cross-section of the front projection screen 20. A primary image source, of which only a projection lens 10 is shown, supplies an image beam 11. The image source may be, for example, a conventional slide of film projector but it may also be suitable for projecting a television or video program by means of three separate projectors, one for each of the primary colours red, green and blue. Another example of a suitable projector is a projector in which a light beam is modulated by means of liquid crystal modulators in accordance with a video or television program to be displayed.

The image beam 11 is reflected by the projection screen 20 into the audience space where a viewer 13 is present. The reflected beam is denoted by the arrows 12.

A preferred arrangement of the screen is such that the screen is tilted forward, the upper edge being closer to the audience space than the lower edge. This position corrects the keystone distortion which occurs when the chief ray of the image beam is not perpendicularly incident on the screen, but from below. Such an arrangement has the further advantage that ambient light incident from above on the screen is reflected mainly downwards instead of towards the audience space. Most ambient light sources are generally present at a level which is higher than that of the screen and/or the audience space. In this arrangement the image source is placed in a lower position than the audience space so that the light from the image source is reflected mainly into to the audience space.

The front projection screen comprises a plate of transparent material having a front side 21 and a rear side 25. The front side 21 has a Fresnel structure comprising a plurality of Fresnel facets 22 and riser edges 23. The facets and riser edges extend in the horizontal direction, perpendicularly to the plane of the drawing. The riser edges are arranged substantially perpendicularly to the plane of the transparent plate 20. The Fresnel facets 22 extend at an acute angle to the plane of the plate. This angle increases from a centre 24 to the edge of the plate. The centre 24 of the Fresnel structure is above the centre of the plate 20. To this end a symmetrical Fresnel structure is moved over a distance, or each Fresnel facet is tilted through a constant angle. This provides a correction for the fact that the audience space and the image source are positioned above each other.

Figure 2 is a sectional plan view of the front projection screen. Like the front side, the rear side has a linear Fresnel structure extending in the vertical direction, perpendicularly to the plane of the drawing. This Fresnel structure comprises Fresnel facets 26 and riser edges 27. The riser edges 27 are approximately perpendicular to the plane of the plate 20. The facets 26 extend at an outwardly increasing angle to this plane. In the embodiment shown the centre 28 of the Fresnel structure is in the centre of the screen.

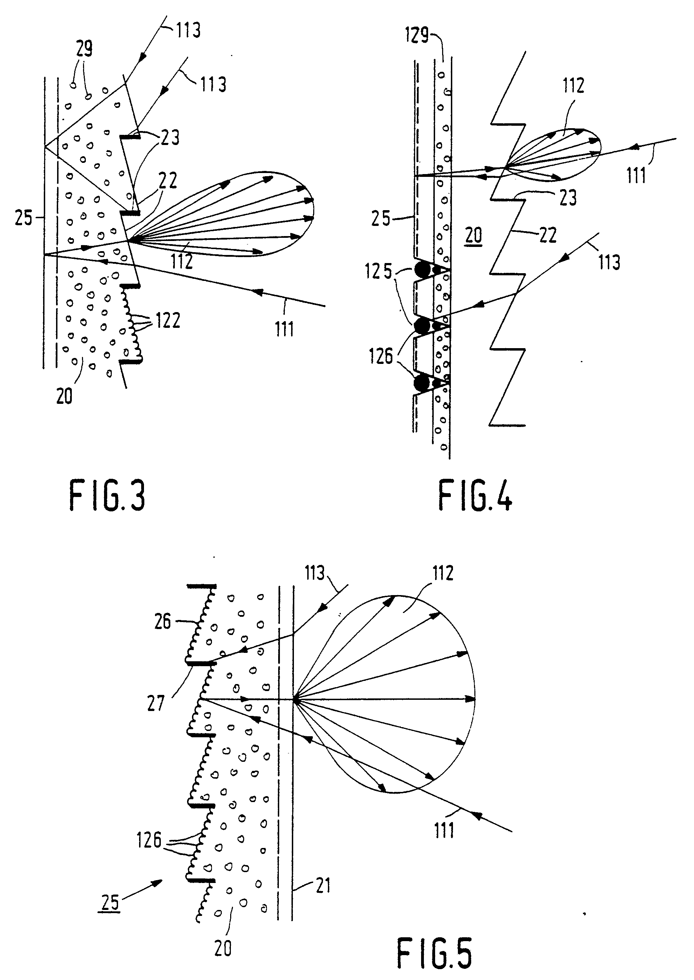

Figure 3 is a detail, shown in a side view, of a vertical cross-section of an embodiment of the projection screen according to the invention. A light ray 111 from the image source 10 (not shown) is incident on one of the facets 22 on the front side of the plate 20. The light ray subsequently traverses the plate, is reflected on the mirror coating provided on the rear side 25 and, after reflection via one of the facets 22, it emerges on the front side. A bulk diffusor comprising transparent material grains 29 incorporated in the plate and having a refractive index which is different from that of the material of the plate 20 is provided in the plate 20. Due to this bulk diffusor the light ray 111 does not emerge as a narrow light ray but as a spread beam of light denoted by 112 in the Figure. The average direction of the beam 112 in the plane of the drawing is determined by the angle of incidence of the light ray 111 and the angle between the facets 22 and the plane of the plate 20. The extend of light spreading is determined by the quantity of bulk diffusor.

Spreading of light may be caused by bulk diffusor as well as by unevennesses on the surfaces of the facets 22 or on the rear side 25. In one embodiment of the front projection screen the facets 22 are provided with microlenses 122. For light spreading in the vertical direction, the plane of the drawing in Figure 3, these may be cylindrical lenses extending in the horizontal direction, perpendicularly to the plane of the drawing. These lenses may be arranged simultaneously with the Fresnel facets 22 on the plate 20. The use of cylindrical lenses for light spreading as compared with the use of bulk diffusor has the advantage that the angular distribution of the light spreading is much better controlled and that spreading outside the audience space can be suppressed. A small quantity of bulk diffusor is, however, desired to mitigate the effects of inaccuracies in the surface. The microlens structure may comprise convex cylindrical lenses, with their convex shape facing the audience space, or concave cylindrical lenses with their hollow side facing forwards, or it may comprise concave lenses alternating with convex lenses.

To enhance the contrast in the projected picture observed by the viewers, the riser edges 23 of the Fresnel structure are preferably provided with a light-absorbing, for example, matt black layer. Ambient light incident on the screen, denoted by light rays 113, is partly intercepted on the edges by the absorbing layer. Since the light from the image source is incident on the screen in a position which is more parallel to the riser edges 23 than the ambient light coming from other directions, relatively more ambient light is intercepted than light from the image beam, so that the net effect is an enhancement of the contrast.

Figure 4 shows a further measure of enhance the contrast. The rear side 25 of the transparent plate 20 has wedge-shaped indentations 125. These indentations extend entirely or partly throughout the width of the plate. The light from the picture beam incident on the edges or sidewall portions of these indentations is substantially entirely reflected on the edges. However, ambient light 113 is predominantly incident at an angle of incidence at which it emerges to the exterior via the edges on the rear side of the screen. Light-absorbing material 126 may be provided in the indentations 125 so as to absorb the light emerging via the edges.

In the embodiment of the screen shown in Fig. 4 the bulk diffusor is provided in a thin layer 129 in the transparent plate 20. Due to this measure the sharpness of the image projected on the screen is enhanced.

Figure 5 is a sectional plan view of a detail of the front projection screen according to the invention. The Fresnel facets 26 on the rear side of the plate 20 have a microlens structure 126 extending in the vertical direction, transversely to the plane of the drawing. The rear side of the facets is further provided with a layer reflecting light to the front side. The microlens structure causes a spread of the incident light in the horizontal plane, the plane of the drawing.

A light ray 111 from the image source traverses the plate 20, is reflected on the rear side and leaves the plate as a beam 112 spread in the horizontal plane. The bulk diffusor incorporated in the plate also contributes to the spreading of light in the horizontal direction.

The edges 27 of the Fresnel structure are transparent, or they are provided with a light-absorbing, for example, matt black layer. The light incident on these edges therefore emerges from the screen via these edges on the rear side or it is absorbed on the edges. As a result of the orientation of the edges with respect to the incident image beam and the ambient light, the fraction of the ambient light incident on the edges will be considerably larger than the fraction of the image beam reaching the edges 27. The contrast in the image observed is thus higher because relatively more ambient light is intercepted than light which comes from the image source.

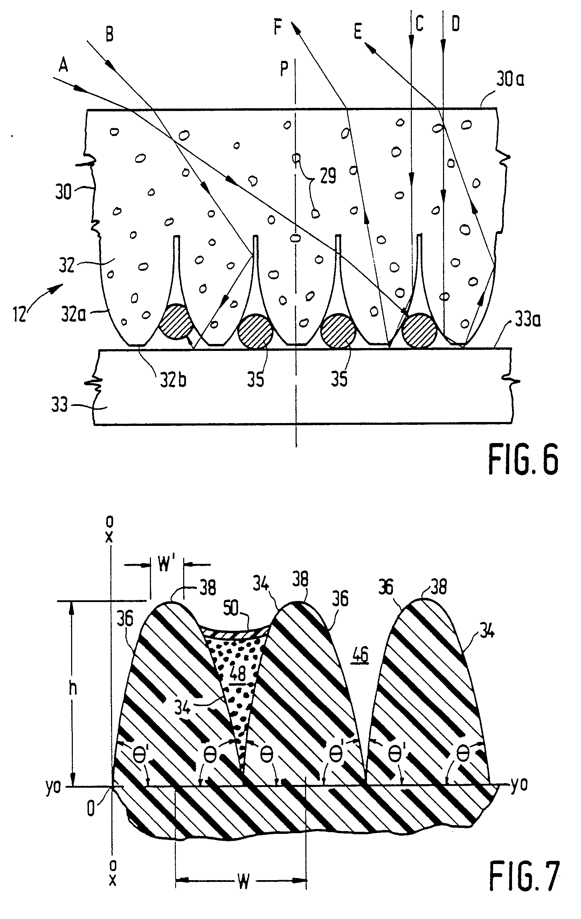

Figure 6 is a horizontal cross-section view, illustrating another embodiment of a projection screen in accordance with the invention. Light transmissive layer 30 has a front planar surface 30a and a rear surface provided with indentations defining an array of vertically oriented lenticules 32, each lenticule having steeply inclined sidewall portions 32a and a tip portion 32b. Adjacent this array is a layer 33 having a light reflective surface 33a in close proximity to the tip portions 32b of the lenticules 32. Alternatively, reflective surface 33a may be optically coupled to the array. For example, an adhesive can be used to fix the reflective surface against the tip. If the adhesive is optically transmissive, and if it has a refractive index approximately equal to the medium of the transmissive sheet, then optically coupling will be realized. Black masking is in the form of light absorbing filaments 35, located in the indentations or grooves between the lenticules 32.

In operation, light rays, designated A through D, from both the projected image and from ambient sources enter layer 30, and are refracted in accordance with Snell's Law. Light rays A and B, representative of ambient light, enter at oblique angles of incidence with respect to the projection axis P. Ray A strikes a lenticule sidewall with an incident angle too small for total internal reflection, and thus is transmitted and absorbed by a filament 35. Ray B strikes a lenticule at an incident angle large enough for total internal reflection, but too small to be transmitted to the tip portion of the lenticule. Ray B is thus transmitted through the adjacent sidewall, reflected from surface 33a and absorbed by a filament 35.

Rays C and D, representative of light from the projected image, enter layer 30 along the projection axis P. Consequently, these rays strike the sidewalls of the lenticules at relatively large angles of incidence, and are totally internally reflected to the tip portions of the respective lenticules, where they are transmitted to reflective surface 33a and reflected back as Rays E and F into layer 30 and hence refracted into the audience field.

Diffusion means in the form of light scattering particles 29 may be present to aid in the spreading of light into the audience field, particularly in the vertical direction.

Figure 7 is a cross-section of three lenticular lens elements, each having side surfaces 34 and 36 and an upper tip surface 38. The side surface 34 and 36 may be linear, but are preferably convexed outward, and have an average slope $\theta$ and $\theta'$ selected to establish a degree of internal reflection desired to direct light from a projection source to the tip surface 38.

Usually, the sides 34 and 36 will be mirror images, i.e., the lenticules will be symmetrical. In such cases, $\theta = \theta'$. Also known in the screen art is the use of lenticules which are not symmetrical. In this case, the distribution of light horizontally can still be symmetrical if adjacent lenticules are reversed, so that $\theta$ and $\theta'$ are reversed, as shown in the Figure. Other arrangements to provide a desired distribution of light are also possible.

In a preferred embodiment, the ratio of the base width W of the lenticules to the width W' of the upper tip surface 38 is in the range of from about 2:1 to 20:1, and preferably at least 3:1. The ratio of the lenticule height h to the base width W is in the range of from about 1:2 to 6:1, and is preferably at least 2:3.

Ratios of height to base width larger than 6:1 are possible, but are not necessary. Ratios of height to base width smaller than 1:2 have reduced efficiency. Ratios of base width to tip width smaller than 2:1 have poorer rejection of ambient light because a large percentage of the rear surface must have a reflective means; else the efficiency is reduced. Ratios of base width to tip width greater than 20:1 have light concentrated to such a small area that providing sufficient accuracy to the side wall shape becomes a problem.

In setting the ratio of base width W of the lenticules to the width W' of the upper tip surface 38, and the ratio of the lenticule height h to the base width W, the refractive index of the light transmissive layer should be taken into account. For the preferred material, polymethylmethacrylate, the refractive index is about 1,5. For other practical materials, this value will not change sufficiently to invalidate the stated ranges of ratios.

The apparent contrast of images displayed on such front projection screens may be enhanced by applying a light absorbing material, so-called black masking, between the lenticules to reduce reflected ambient light. Black masking is shown in both Figure 6 and Figure 7. In Figure 6, such masking is accomplished by placing a black filament or thread capable of absorbing visible light in the indentations or grooves 46 between the lenticules. In Figure 7, such masking is accomplished by filling a substantial portion of the grooves 46 with discreet black particles 48, and by containing said particles by means of a skin 50 which extends between the lenticular ribs 32 and over the groove 46. By properly choosing the refractive index of the filling material the maximum angle for total internal reflection can be adjusted to provide optimum selectivity between light rays originating from the image source and ambient light. Such a black mask construction is described in U.S. patent 4 605 283.

As mentioned above, diffusion means may be employed in such front projection screens in order to increase the vertical distribution of light provided by the projection lenses. This diffusion can be effected by a bulk property of the refracting material from which the screen is constructed, or can be due to surface texturizing of any surface, or can be a diffusion layer present in a composite laminate, or can be produced by some combination of these approaches.

As an alternative to diffusion means, a longitudinal lenticular lens array at right angles to the main array may be employed to aid in the distribution of light in the vertical direction. The focal length of the elements of the array should be substantially different from the thickness of the transmissive layer. The array can be on the surface 30a or imbedded in the sheet 30, provided that there is a refractive index change at the array interface to provide for optical power. A practical change in refractive index for this purpose would be 0.1 or greater. Plastics are known which still provide this amount of variation of refractive index, even within one generic glass, such as acrylics.

In the event that it is desired to also have a horizontal linear Fresnel lens on surface 30a to provide for vertical control of the mean direction of projected light returned to the audience space, or in conjunction with a horizontally curved screen to compensate for the angle at which projected light strikes the screen, the surface of the facets of the linear Fresnel lens can be curved so that the linear Fresnel lens provides for the dual purpose of spreading light vertically and controlling the direction of incident or projected rays. Such curvature would be cylindrically convex or cylindrically concave.

Front projection screens made in accordance with the present invention can be manufactured by various processes, including compression molding, injection molding, extrusion, hot roller pressing, casting and photo-polymerization processes. Such screens can be constructed of optically transparent or translucent solid materials such as inorganic glasses and a variety of plastics. A preferred material is polymethylmethacrylate. The front surface of the screen may be treated with a coating to improve its durability.

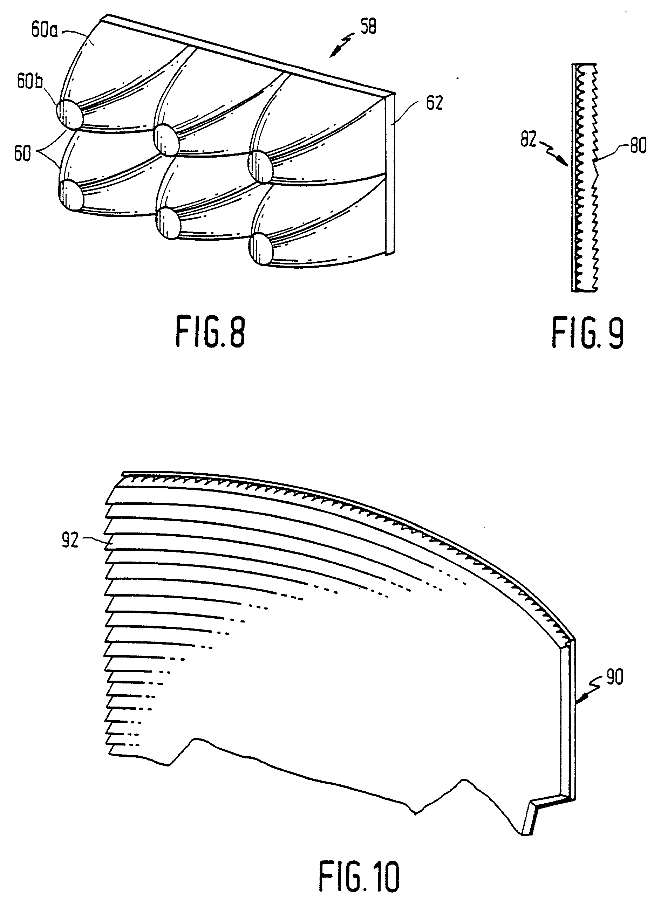

An important variation of the design of the screen is to replace the longidinal lenticular array with a two dimensional array of 4-sided truncated pyramids having horizontal and vertical cross-sections corresponding to the cross-section of a linear lenticule. The pyramids need not have square bases, but can have, for example, a narrower pitch in the vertical direction which will result in a narrower distribution of light vertically than horizontally. Such an array 58 is shown in Figure 8, in which truncated pyramids 60 comprise sides 60a and tips 60b, and black masking 62 is present in the spaces between the pyramids 60 in both the vertical and horizontal directions. Use of the pyramids will result in a greater effective area of black masking and so will improve the constrast of displays viewed in ambient light. This variation will especially improve the absorption of ambient light predominantly directed from above or below.

If it is needed, a Fresnel lens 80 can be introduced on the front surface (i.e. the surface observed by the audience) of a one-piece screen 82 shown in Figure 9. Such a Fresnel lens can be designed to compensate for the change in angle that the projected light makes with the screen normal at different portions of the screen. This is most needed if the projection distance is relatively short or the projection screen is relatively large.

Another method of compensating for the angle at which projected light strikes the screen is to curve the screen concavely as viewed from the audience field. As will be appreciated, curving the screen in one direction and using a linear collimating Fresnel lens in the other direction advantageous in providing a degree of normally incident light rays otherwise obtainable only by spherically curving the screen, which is often difficult to achieve in practice. Such an arrangement is shown in Figure 10, in which horizontally oriented linear Fresnel lens 92 is present on the front surface of screen 90, which is curved in the horizontal direction only.

## Claims

1. A front projection screen for displaying in an audience space an image supplied by an image beam from an image source, which projection screen comprises a plate having a front side and a rear side, the front side facing the audience space, said plate having diffusing means for spreading light from the image source in the audience space, characterized in that the plate is transparent and that the rear side of the plate is provided with a relief structure comprising first and second facets, said first facets being planar and orientated substantially in parallel with the plane of the plate, and provided with reflection means, said second facets being non-reflective and orientated at an angle of at least 45° to the plane of the plate.

2. A front projection screen as claimed in Claim 1, characterized in that the relief structure on the rear side is provided with longitudinal indentations alternating with flat portions forming first facets of the relief structure, said indentations having sidewall portions forming second facets of the relief structure.

3. A front projection screen as claimed in Claim 1 or 2, characterized in that said relief structure comprises a Fresnel structure, the Fresnel facets and riser facets of said Fresnel structure forming first and second facets of the relief structure, respectively.

4. A front projection screen as claimed in Claim 2, characterized in that the relief structure comprises lenticular elements formed by the alternation of indentations and first facets, the first facets constituting tip portions of the lenticular elements, whereby the lenticular elements have a height to base width ratio of about 1:2 to 6:1 and a base width to top width ratio from about 2:1 to 20:1.

5. A front projection screen as claimed in Claim 2, characterized in that the indentations extend across the plate in two substantially perpendicular directions and the first facets constitute the tip portion of a truncated pyramid, which pyramid further has a substantially rectangular base portion and four sidewall portions.

6. A front projection screen as claimed in Claim 1, 2, 3, 4 or 5, characterized in that light-absorbing material is deposited at the second facets of the relief structure.

7. A front projection screen as claimed in Claim 6, characterized in that the light-absorbing material comprises black filaments.

8. A front projection screen as claimed in Claim 6, characterized in that the light-absorbing material comprises black particles.

9. A front projection screen as claimed in Claim 1, 2, 3, 4, 5, 6, 7 or 8, characterized in that the plate comprises a first linear Fresnel structure at the front side of the plate extending in a first direction, and a second linear Fresnel structure at the rear side of the plate extending in a direction perpendicular to said first direction.

10. A front projection screen as claimed in Claim 9, characterized in that light-absorbing material is deposited at the riser facets of said first Fresnel structure.

11. A front projection screen as claimed in any one of the preceding Claims, characterized in that said light diffusing means comprise a microlens structure provided at the rear side of the plate, which microlens structure comprises a multitude of cylindrical lenses arranged on said first facets and extending in the same direction as the first facets.

12. A front projection screen as claimed in any one of the preceding Claims, characterized in tht the light spreading means comprises a bulk diffusor incorporated in the transparent plate.

13. A front projection screen as claimed in Claim 12, characterized in that the bulk diffusor is provided as a thin layer in the transparent plate.

14. A front projection screen as claimed in Claim 9 or 10, characterized in that the light diffusing means comprise a microlens structure provided at the front side of the plate, which microlens structure comprises a multitude of cylindrical lenses on Fresnel facets of said first linear Fresnel structure and extending in the same direction as said Fresnel facets.

15. A front projection screen as claimed in any one of the preceding Claims, characterized in that the reflective means comprises an external layer having a mirrored surface adjacent the rear side of the plate.

FIG.1

FIG.2

1-IV-PHA 40516C

FIG.3

FIG.4

FIG.5

FIG.6

FIG.7

3-IV- PHA 40516 C

FIG.8

FIG.9

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | US-A-4 206 969 (S. COBB)<br>* Column 2.3; figures 1,2 * | 1,3,15 | G 03 B 21/60 |
| A | | 12-13 | |
| Y | CH-A- 318 891 (E. GRETENER)<br>* Page 3, column 1; figures 4,5 * | 1,3,15 | |
| A | CH-A-3 188 991 | 11 | |
| Y | PATENT ABSTRACTS OF JAPAN, vol. 11, no. 375 (P-644)[2822], 8th December 1987; & JP-A-62 145 233 (DAINIPPON PRINTING CO., LTD) 29-06-1987<br>* Abstract * | 1 | |
| A | IDEM | 2,4 | |
| A | EP-A-0 231 554 (N.V. PHILIPS' GLOEILAMPENFABRIEKEN)<br>* Column 3, lines 32-55; figures 1-3 * | 7 | |
| A | EP-A-0 231 553 (N.V. PHILIPS' GLOEILAMPENFABRIEKEN)<br>* Column 4, lines 55-58; figure 2c * | 8 | TECHNICAL FIELDS SEARCHED (Int. Cl.4)<br><br>G 03 B 21/60<br>G 03 B 21/62 |
| A | EP-A-0 233 662 (N.V. PHILIPS' GLOEILAMPENFABRIEKEN)<br>* Column 8, lines 21-39; figure 3D * | 5,10 | |

The present search report has been drawn up for all claims

| Place of search | Date of completion of the search | Examiner |
|---|---|---|
| THE HAGUE | 19-01-1989 | BOEYKENS J.W. |

EPO FORM 1503 03.82 (P0401)